(19) Europäisches Patentamt
European Patent Office
Office européen des brevets

(11) **EP 0 567 769 B1**

(12) **EUROPÄISCHE PATENTSCHRIFT**

(45) Veröffentlichungstag und Bekanntmachung des Hinweises auf die Patenterteilung:
**28.01.1998  Patentblatt 1998/05**

(51) Int. Cl.$^6$: **B65B 7/18**, B65B 51/22

(21) Anmeldenummer: **93104624.7**

(22) Anmeldetag: **21.03.1993**

(54) **Vorrichtung zum Einfalten des Bodens einer Kartonpackung**

Device for folding in the bottom-flaps of a packaging carton

Dispositif pour replier le fond d'un carton d'emballage

(84) Benannte Vertragsstaaten:
**AT BE CH DE DK ES FR GB GR IE IT LI NL PT SE**

(30) Priorität: **01.05.1992 DE 4214519**

(43) Veröffentlichungstag der Anmeldung:
**03.11.1993  Patentblatt 1993/44**

(73) Patentinhaber:
**Tetra Laval Holdings & Finance SA**
**1009 Pully (CH)**

(72) Erfinder: **Waldstädt, Manfred**
**6500Mainz 1 (DE)**

(74) Vertreter:
**Weber, Dieter, Dr. et al**
**Weber, Dieter, Dr.,**
**Seiffert, Klaus, Dipl.-Phys.,**
**Lieke, Winfried, Dr.**
**Postfach 61 45**
**65051 Wiesbaden (DE)**

(56) Entgegenhaltungen:
**DE-A- 1 461 787        DE-C-  283 978**
**FR-A- 2 310 260        FR-A- 2 366 996**
**GB-A- 2 017 041        US-A- 2 514 867**
**US-A- 3 996 724**

**Beschreibung**

Die Erfindung betrifft eine Vorrichtung zum Einfalten einer Stirnseite einer Packung aus mit Kunststoff beschichtetem Kartonmaterial, deren Stirnseite im eingefalteten Zustand in Draufsicht im wesentlichen viereckig ist und eine umfaltbare Quersiegelnaht hat, mit einem Faltteil und einem Gegenfaltteil, die beide mittels wenigstens einer Hebelmechanik entlang bestimmter Bewegungsbahnen bewegbar angetrieben und jeweils an mindestens einem gesteuert angetriebenen Verbindungsteil befestigt sind und unter welchen in Y-Richtung im Abstand ein die Packungen in X-Richtung bewegender Förderer angeordnet ist, wobei die Y-Achse senkrecht auf der X-Achse steht, der Nullpunkt der Achsen in der Endfaltposition der beiden Faltteile liegt und eine sich in Z-Richtung erstreckende Y-Z-Ebene in der Y-Achse liegt und von der X-Achse senkrecht geschnitten wird, und wobei die Bewegungsbahnen beider Faltteilie bezüglich der Y-Z-Ebene symmetrisch zueinander verlaufen und sich die Bewegungsbahnen in der X-Y-Ebene als eine Überlagerung einer translatorischen und einer rotatorischen Bewegung des jeweiligen Faltteils beschreiben lassen.

Packungen aus beschichtetem Karton haben bekanntlich einen im wesentlichen tubusförmigen Hauptkörper mit Stirnseiten an den Enden. Im allgemeinen ist die eine Stirnseite der Deckel und die andere als Boden ausgestaltet. Wenigstens eine der beiden Stirnseiten, z. B. der Boden, ist bei bekannten Packungen im eingefalteten Zustand in Draufsicht im wesentlichen viereckig. Bei anderen Packungen ist der Deckel mit einem sogenannten Giebelverschluß versehen, der auch in Draufsicht viereckig ist. Auch einen solchen Giebelverschluß kann man flach derart umlegen, daß diese deckelseitige Stirnseite senkrecht zu den Tubuswänden liegt. Für die Erfindung ist es unwesentlich, ob die Stirnseite ein Deckel oder ein Boden ist.

Eine Vorrichtung ähnlich der eingangs genannten Art ist aus der FR-A-2 310 260 bekannt. Giebelflächen der Packung sind vorgefaltet und erwärmt; denn die keilförmig ausgestalteten Werkzeugbacken besorgen nur ein Umlegen und Pressen der Kopfseite mit der vorgewärmten Naht, die nach innen vorgefaltet sein muß. Dann nämlich wird keine exakte Bewegungsbahn der Werkzeugbacken verlangt. Die Packungen werden von nichterwähnten Halterungen in die Schließstation geführt, ohne daß die Halterungen, die sich an der Unterseite der Packung befinden mögen, einen Einfluß auf die Faltung hätten. Während der letzten Bewegung vor dem Falten sorgt eine zu der bekannten Maschine gehörende Leiste zum Halten der vorgefalteten Stegnaht.

Wollte man eine nichtvorgefaltete Giebelwand einer Packung der eingangs erwähnten Art in ein und derselben Position falten und kurz danach in zuverlässiger Weise dichtend versiegeln, dann könnte die bekannte Vorrichtung nicht verwendet werden und ist sicherlich für das Herausfalten der Giebelflächen nach außen unbrauchbar.

Auch den Hygieneanforderungen in der Nahrungsmittelindustrie würde die bekannte Vorrichtung nicht genügen; denn über der offenen Packung befinden sich diverse Einrichtungen und Bauteile, die der Schmierung bedürfen und von denen möglicherweise Schmiermittel in die offenen Packungen tropft.

Aus der US-A-3 996 724 ist weiterhin eine Vorrichtung zum Einfalten der Stirnseite einer Packung ähnlich der eingangs genannten Art bekannt, bei welcher der Raum über der von einer Zentriereinrichtung gehalterten jeweiligen Packung frei von Bauteilen ist, so daß keine Verunreinigungen in die Packung gelangen können. Diese Maßnahme könnte aber bei der Vorrichtung der zuerst genannten bekannten Art nicht eingesetzt werden; denn alle Lagerungen, Kurven, Hebel und dergleichen müßten bei der zuerst genannten Vorrichtung dann doppelt angeordnet werden. Einen derartigen Aufwand würde jeder Techniker als übertrieben ablehnen. Außerdem würde eine exakte Bahnkurve des Faltteiles im Sinne der Erfindung bei der zuletzt genannten bekannten Vorrichtung nicht möglich sein, zumal die beiden Faltteile nicht symmetrisch zueinander verlaufen. Die Drehpunkte liegen bei der bekannten Vorrichtung auf unterschiedlichen Höhen, drehen also um unterschiedliche Radien. Die Giebelflächen werden bei der bekannten Vorrichtung wiederum nach innen gefaltet, und es ist eine separate Vorfaltung vor der gezeigten Endfaltung vorausgesetzt.

Aufgabe der Erfindung ist es daher, eine Einfaltvorrichtung der eingangs genannten Art zu schaffen, bei welcher Stirnseiten, zum Beispiel der Boden einer Packung, in einem einzigen Schritt ohne eine Aufteilung in ein Vorfalten und ein späteres Nachfalten eingefaltet werden können, wobei die Giebelflächen der jeweiligen Stirnseite herausgefaltet werden sollen. Bei diesem Herausfalten sollen auch keine Maschinenteile in die Packung eingreifen, vorzugsweise nicht einmal Bauteile über der offenen Packung stehen, und das Versiegel soll möglichst kurz danach noch in der Faltposition erfolgen.

Diese Aufgabe wird erfindungsgem äß dadurch gelöst, daß die Bewegungen beider Faltteile von einem einzigen Antriebszahnrad abgeleitet sind, ein Faltteil (Amboß) von beiden Seiten gelagert ist, symmetrisch zum Nullpunkt der beiden Achsen (X, Y) eine Zentriereinrichtung für die Packung angeordnet ist und der Raum der Einfaltvorrichtung über der Zentriereinrichtung vor dem Einfallen frei von Bauteilen ist.

Die gesamte Einfaltvorrichtung gemäß der Erfindung kann vorzugsweise beim Einfallen des Bodens einer Packung verwendet werden, weshalb die Beschreibung konkret auf einen Boden bezogen wird, wenngleich auch Deckel in dieser Weise ausgestaltet sein können. Ein solcher Boden ist in Draufsicht im eingefalteten Zustand im wesentlichen viereckig ausgestaltet und ist vorzugsweise sogar eben. Das ist im Falle eines Bodens wichtig, damit die Packung einen guten Stand hat.

Die Reihe von gefüllten und mit dem offenen Boden nach oben stehenden Packungen wird wenigstens im Faltbereich der erfindungsgemä ßen Vorrichtung ein Stück weit auf einem geraden Band in X-Richtung geführt. Zweckmäßig liegt die X-Richtung horizontal. Senkrecht dazu kann man sich eine Z-Richtung vorstellen, die ebenfalls horizontal liegt, und für das räumliche Verhältnis ist auch eine Y-Achse vorstellbar, welche auf den anderen beiden Achsen senkrecht steht. Erfindungsgemäß wird ein Nullpunkt definiert, bei welchem sich die drei Achsen schneiden und in welcher eine Y-Z-Ebene vorgegeben wird, welche senkrecht von der X-Achse geschnitten wird. Die erste Lehre der Erfindung zur Lösung der genannten Aufgabe besteht nun darin, daR die Bewegungsbahnen beider Faltteile bezüglich dieser Y-Z-Ebene symmetrisch zueinander verlaufen. Der Nullpunkt ist dabei der Endpunkt, an welchem sich die beiden Faltteile berühren, wenn die Einfaltung des Bodens abgeschlossen ist, so daß dort auch das Ende der Bewegungsbahnen liegt.

Der Anfang der Bewegungsbahnen liegt weiter oberhalb und außerhalb zu beiden Seiten im Abstand von der Y-Z-Ebene, weil dort sowohl für das Faltteil als auch für das Gegenfaltteil die Ausgangs-, Null- oder Ruhepositionen liegen.

Denkt man sich eine vertikale Ebene mittig durch die Packung senkrecht zu deren Förderrichtung in der X-Achse gelegt, dann muß spätestens in dem Augenblick diese Mittenebene der offenen Packung in der Y-Z-Ebene liegen, wenn die vordersten Kanten von Faltteil und Gegenfaltteil den noch nicht eingefalteten Boden gerade zu berühren beginnen.

Jede Bewegungsbahn der Faltteile stellt eine Überlagerung einer translatorischen und einer rotatorischen Bewegung des jeweiligen Faltteiles dar, d.h. die Faltteile werden nicht um feste Achsen gedreht, sie werden aber auch nicht nur geradlinig bewegt. Vielmehr ist vorgesehen, jedes Faltteil an einem Verbindungshebel zu befestigen, der in bestimmter Weise gesteuert und angetrieben ist, um gegen den einzufaltenden, noch offenen Boden anzufahren und ohne Vorfaltung das Einfalten exakt durchzuführen.

Es hat sich früher gezeigt, daß selbst bei genauerster Bewegungsbahn der Faltteile ohne Vorfalten der Boden nicht ohne besondere Maßnahmen entlang der Grenzfaltlinien und nur entlang dieser Linien gefaltet werden kann. Diese Grenzfaltlinien liegen am Tubusende der Packung und stellen sozusagen die Grenze zum Stirnseitenfaltbereich dar. Häufig hat man unerwünschte Knickfaltungen festgestellt, die sich auch noch unterhalb dieser Grenzfaltlinie in eine oder mehrere Tubuswandungen erstrecken.

Deshalb ist erfindungsgemäß außerdem vorgesehen, daß symmetrisch zum Nullpunkt eine Zentriereinrichtung angeordnet wird, in welche die Packung eingeführt und während des Faltens unterstützt wird.

Die zwei bevorzugten länglichen Zentrierleisten der Zentriereinrichtung geben scharfe Faltkanten vor, über welchen unter den nach außen zu faltenden Giebelwandfeldern die oben erwähnten unteren Grenzfaltlinien liegen, so daß diese an der Giebelfläche liegende Grenzfaltlinie mit Hilfe der jeweiligen Zentrierleiste geknickt wird und sicherstellt, daß die obere Spitze des Giebels in Z-Richtung nach außen wandert.

Dadurch wird mit Vorteil in den Seiten quer zur Längserstreckung der Zentrierleisten, d.h. in den Seitenwänden, die parallel zur Y-Z-Achse liegen, die Spannung erhöht, so daß beim Zufalten längs der Endfaltlinie eine saubere Faltung des Bodenverschlusses nach innen erfolgt. Durch die Zentrierleiste wird gewährleistet, daß beim Zusammenfalten die Giebelwände tatsächlich nach außen in Z-Richtung gefaltet werden, da der obere Rand der Faltpackung, der zwischen den Zentrierleisten so vorgespannt wird, daß dort in X-Richtung ein etwas längerer Packungsdurchmesser entsteht als in Z-Richtung, das Bestreben hat, seine ungespannte Ausgangsposition wieder einzunehmen. Ohne solche Zentrierleisten könnte auch ein Einfalten oder Einklappen nach innen passieren. Die Zentriereinrichtung sieht also mit Vorteil eine sichere und gute Faltung vor.

Durch die vorstehenden Maßnahmen gemäß der Erfindung ergibt sich eine richtige Einfaltung der jeweiligen Stirnwand, sei es daß es der Boden oder der Deckel ist, ohne daß die stirnseitigen Faltteile vorher vorgefaltet sein müßten, und außerdem ergibt sich ein Herausfalten der Giebelflächen in Z-Richtung. Die Eckpunkte der erwähnten Grenzfaltlinie wandern nicht auf einem Kreis, und durch die Kombination translatorischer und rotatorischer Bewegungen zwingen die Faltteile erfindungsgemäß die nicht vorgefaltete Packung zu der gewünschten richtigen Bodenfaltung. Die Hygieneprobleme sind erheblich verbessert, weil keine Bauteile im Raum der Einfaltvorrichtung über der Zentriereinrichtung liegen, also über der noch offenen Packung. Obwohl nur ein einziger Schritt ohne Vorfalten genügt, um die richtige Stirnwandfaltung zu erreichen, greifen keine Maschinenteile in die Packung ein. Weil nur ein Faltteil und ein Gegenfaltteil vorgesehen ist, welche die Faltung vorbereiten, wonach beispielsweise mit einer Sonotrode ein Verschweißen der Quersiegelnaht erfolgen kann, sind nicht nur Verunreinigungsgefahren erniedrigt, sondern die Vorrichtung hat auch nur wenige Teile und arbeitet daher zuverlässiger.

Die gesteuert angetriebenen Verbindungshebel stellen Teile eines Gelenkstangengetriebes dar, welches genau den zeitlichen und räumlichen Ablauf der Teilebewegung vorsieht und bestimmt.

Besonders bevorzugt ist es erfindungsgemäß, wenn jede Bewegungsbahn im Anfangsbereich unter einem Winkel von weniger als 45°, vorzugsweise weniger als 30°, gegen über der X-Achse und im Endbereich unter einem Winkel von mehr als 45°, vorzugsweise mehr als 60°, gegen die X-Achse verläuft. Der Anfangsbereich liegt also außen im größeren Abstand vom Nullpunkt, und hier bewegen sich die Faltteile flacher als im Endbereich, wo sie in Anlage mit den zu faltenden Bodenfeldern der Packung steiler auf die Endfaltposition zufahren.

Dabei ist es erfindungsgem äß besonders vorteilhaft, wenn jede Bewegungsbahn zwischen dem Anfangs- und dem Endbereich einen kontinuierlichen Übergang hat. Die Faltung gelingt einwandfrei und genau, wenn nicht zwei gerade Bahnen aneinandergesetzt werden und in einem Knickpunkt ineinander übergehen, sondern wenn die Bewegungsbahn stetig ist, also eine sich allmählich ändernde Steigung hat, jede Bewegungsbahn sozusagen gerundet ist.

Genauere Untersuchungen haben zu dem erfindungsgemäßen Ergebnis geführt, daß die Aufgabe besonders dann einwandfrei und gut gelöst wird, wenn die Bewegungsbahn des Faltteils im ersten Quadranten, in welchem also die x-Werte auf der X-Achse und auch die y-Werte auf der Y-Achse positiv sind, in einem bestimmten Flächenbereich verläuft, der durch zwei Kurven begrenzt wird. Hier soll im ersten Quadranten beispielsweise die untere Grenzkurve $y_1 = f_1(x)$ heißen, und die obere Grenzkurve soll heißen $y_2 = f_2(x)$ mit

$$f_1(x) = a_1 + b_1 x - c_1 x^2 + d_1 x^3 - e_1 x^4 + g_1 x^5 \text{ und}$$

$$f_2(x) = a_2 + b_2 x - c_2 x^2 + d_2 x^3 - e_2 x^4 + g_2 x^5.$$

Im zweiten Quadranten, für positive y-Werte in Y-Richtung und negative x-Werte in die linke negative Richtung der X-Achse soll die Bewegungsbahn in einem Flächenbereich verlaufen, der zusätzlich durch zwei weitere Kurven begrenzt ist, die lauten

$$f_3(x) = a_1 - b_1 x - c_1 x^2 - d_1 x^3 - e_1 x^4 - g_1 x^5$$

$$f_4(x) = +a_2 - b_2 x - c_2 x^2 - d_2 x^3 - e_2 x^4 - g_2 x^5, \text{ wobei gilt}$$

$$a_1 = -135{,}006$$

$$b_1 = +23{,}452$$

$$c_1 = +1{,}398$$

$$d_1 = +0{,}041922$$

$$e_1 = +6{,}183 \times 10^{-4}$$

$$g_1 = +3{,}571 \times 10^{-6}$$

$$a_2 = +17{,}312$$

$$b_2 = +2{,}002$$

$$c_2 = +0{,}213$$

$$d_2 = +1{,}355 \times 10^{-2}$$

$$e_2 = +4{,}022 \times 10^{-4}$$

$$g_2 = +4{,}386 \times 10^{-6}.$$

Man hat gefunden, daß sich eine Faltung nicht vollständig durchführen läßt, wenn die vorderen Kanten des Faltteils und des Gegenfaltteils nicht in den genannten Flächen verlaufen.

Andererseits aber gelingt das Einfalten besonders günstig dann, wenn die Bewegungsbahn der vordersten Kante des jeweiligen Faltteils, welches mit den einzufaltenden Bodenwandfaltlinien in Eingriff kommen, einer bestimmten Kurvendefinition folgen, d.h. eine bestimmte Bewegungsbahn $f_a(x)$ im ersten Quadranten und $f_b(x)$ im zweiten Quadranten durchführen. Beide Kurven werden dabei rechnerisch aus zwei Teilkurven zusammengesetzt, nämlich für den ersten Quadranten aus einer Kurve $y_{a6} = f_{a6}(x)$ aus dem Definitionsbereich $D_1$; und einer zweiten sich zum Anfangsbewegungsbereich hin erstreckenden Teilkurve $y_{a7} = f_{a7}(x)$ für den Definitionsbereich $D_2$. Dabei soll erfindungsgem äß gelten:

$$f_{a6}(x) = -a_3 + b_3 x - c_3 x^2 + d_3 x^3 - e_3 x^4 \text{ für}$$

$$D_1 \{x/0 \leq x \leq 6\} \text{ und}$$

$$f_{a7}(x) = a_4 + b_4 x - c_4 x^2 + d_4 x^3 - e_4 x^4 \text{ für}$$

$$D_2 \{x/6 \leq x \leq 40\}.$$

Für den zweiten Quadranten, also für positive y-Werte und negative x-Werte wird die Bewegungsbahn entsprechend zusammengesetzt aus der Kurve $y_{a8} = f_{a8}(x)$ (im Endbereich) und $y_{a9} = f_{a9}(x)$ (im Anfangsbereich). Dabei gilt:

$$f_{a8}(x) = -a_3 - b_3 x - c_3 x^2 - d_3 x^3 - e_3 x^4 \text{ für}$$

$$D_3 \{x/-6 \leq x \leq 0\} \text{ und}$$

$$f_{a9}(x) = a_4 - b_4 x - c_4 x^2 - d_4 x^3 - e_4 x^4 \text{ für}$$

$$D_4 \{x/-40 \leq x \leq -6\}, \text{ wobei gilt}$$

$$a_3 = 8{,}7013$$

$$b_3 = 14{,}224$$

$$c_3 = 3{,}4512$$

$$d_3 = 0{,}40883$$

$$e_3 = 0{,}017696$$

$$a_4 = 10{,}216$$

$$b_4 = 1{,}5685$$

$$c_4 = 0{,}046046$$

$$d_4 = 0{,}68195 \times 10^{-3}$$

$$e_4 = 0{,}39415 \times 10^{-5}.$$

Man kann für die Bereichswerte $D_1$ bis $D_4$ annehmen, daß für x die Millimeterwerte einer Flüssigkeitspackung genommen werden können. Zum Beispiel kann die Breite des Bodens einer Packung in Draufsicht, in Z-Richtung gesehen, 70 mm betragen.

Deshalb ist es zweckmäßig, wenn erfindungsgem äß vorgesehen wird, daß die Länge jeder Bewegungsbahn in X-Richtung etwas größer oder gleich der halben Länge des Bodens in X-Richtung ist.

Dabei hat es sich als besonders günstig erwiesen, wenn erfindungsgem äß das Verhältnis von Abstand zwischen den Zentrierleisten und Breite der Packung in Z-Richtung quer zu ihrer Förderrichtung 0,95 beträgt. Dann nämlich ergibt sich die sauberste Faltung und die beste Erhöhung der Spannung in den nicht von Anschlägen unterstützten Tubuswänden.

Weiterhin ist die Vorrichtung erfindungsgem äß dadurch gekennzeichnet, daß der Verbindungshebel des Gegenfaltteils über einen ersten Drehpunkt mit einem Ende einer abgetriebenen, an ihrem gegenüberliegenden Ende an einem stationären Drehpunkt gelagerten Faltführungsstange und über einen zweiten Drehpunkt mit einer Antriebskurbel verbunden ist, die an einem Antriebszahnrad befestigt ist, das mit dem Antriebszahnrad des anderen Verbindungshebels so in Kämmeingriff steht, daß die Y-Z-Ebene senkrecht zur Verbindungslinie der Zahnraddrehpunkte steht. Damit kann man sowohl das Faltteil als auch das Gegenfaltteil synchron zueinander auf den gewünschten Bahnen bewegen und Hebel außerhalb des Bereiches über der Bewegungsbahn der offenen Packungen halten, vorzugsweise in die +Z oder -Z-Richtung nach außen versetzt anordnen.

Zweckmäßig ist es erfindungsgem äß auch, wenn das Faltteil nach vorn im Querschnitt verjüngt zur Form einer Platte ausläuft und wenn das Gegenfaltteil als Amboß ausgestaltet ist, gegen welchen eine Sonotrode mit einer Bewegungsbahn andrückbar ist, die sich vorzugsweise von der Bewegungsbahn des Faltteils zeitlich und/oder örtlich unterscheidet. Bei der Erläuterung der Bewegungsbahnen und Funktionen wurde schon darauf abgestellt, daß sich die aktiv faltenden Kanten von Gegenfaltteil einerseits und Faltteil andererseits in den Definitionsbereichen bewegen sollen, und deshalb ist es zweckmäßig, wenn man das Faltteil nach vorn verjüngend zu einer Platte ausbildet, die dann eine geradezu messerfeine Druck- und Faltkante hat. Ein solches Faltteil könnte man dann auch als Faltblech bezeichnen und erfüllt voll seine Funktionen und läßt gleichwohl Platz für das Einfahren einer Sonotrode, die sich darüberhinaus sogleich auch an das Gegenfaltteil anlegen und zum Schweißen in Funktion treten kann, denn das Gegenfaltteil ist als Amboß ausgestaltet. Der Amboß ist eine außen völlig glatte und saubere Baueinheit, so daß die oben offene Packung sogar unter dem Amboß hindurchfahren kann, ohne daß die angesprochenen Reinigungsprobleme auftreten würden. Lagerungen des Ambosses und dergleichen liegen dann wieder außerhalb der Bewegungsbahn der offenen Packungen.

Weitere Vorteile, vorteilhafte Merkmale und Anwendungsmöglichkeiten der vorliegenden Erfindung ergeben sich aus der folgenden Beschreibung eines bevorzugten Ausführungsbeispieles in Verbindung mit den Zeichnungen. Es zeigen:

Fig. 1     teilweise abgebrochen und schematisch die Einfaltvorrichtung mit dem Faltblech b als Faltteil, dem Amboß a als Gegenfaltteil, dem Antriebsgestänge, der Sonotrode und dreier darunter von links nach rechts in X-Richtung geförderter Packungen,

Fig. 2     eine sehr ähnliche Darstellung, wobei jedoch ein anderer Betriebszustand dargestellt ist, bei welchem die vorderen Eingriffskanten des Faltbleches und des Ambosses die gerade in Einfaltung befindliche Stirnseite der Packung schon mehr als die Hälfte eingefaltet haben,

Fig.3     eine wiederum ähnliche Seitenansicht, bei welcher ein noch späterer Betriebszustand erreicht ist, bei welchem auch die Sonotrode schon dicht vor den Amboß heranbewegt worden ist,

Fig. 4     die Seitenansicht der Zentriervorrichtung über einem Transportbehälter mit nach oben herausstehenden Bodenwandfeldern, die gefaltet werden müssen, in Z-Richtung gesehen,

Fig. 5     eine Ansicht der Darstellung der Fig. 4 von rechts nach links gemäß Pfeil V, d. h. in -X-Richtung gesehen,

Fig. 6     eine Draufsicht auf die Ansicht der Fig. 4 ohne Transportbehälter mit angedeuteten Rundungen im Bereich der Ecken des zu faltenden Bodens,

Fig. 7     die X-Y-Achsen mit dem Nullpunkt O, den Flächenbereichen für die Kurven und die gestrichelten optimalen Bewegungsbahnen $f_a(x)$ und $f_b(x)$, wobei die Y-Achse durch die Mitte der Packung gehend sich vorzustellen ist, und in X-Richtung die Prägelinien des zu faltenden Packungsbodens verlaufen, die in den Fig. 1 bis 4 zu sehen sind,

Fig. 7a     eine Teilansicht des ersten und zweiten Quadranten der gestrichelten Kurven $f_a(x)$ und $f_b(x)$, die jeweils aus zwei Teilkurven zusammengesetzt sind mit den dazu angegebenen Definitionsbereichen $D_1$ bis $D_4$ und

Fig. 8     eine Draufsicht auf die Einfaltvorrichtung, bei der aber nur die wesentlichen Teile zum Verständnis dargestellt sind.

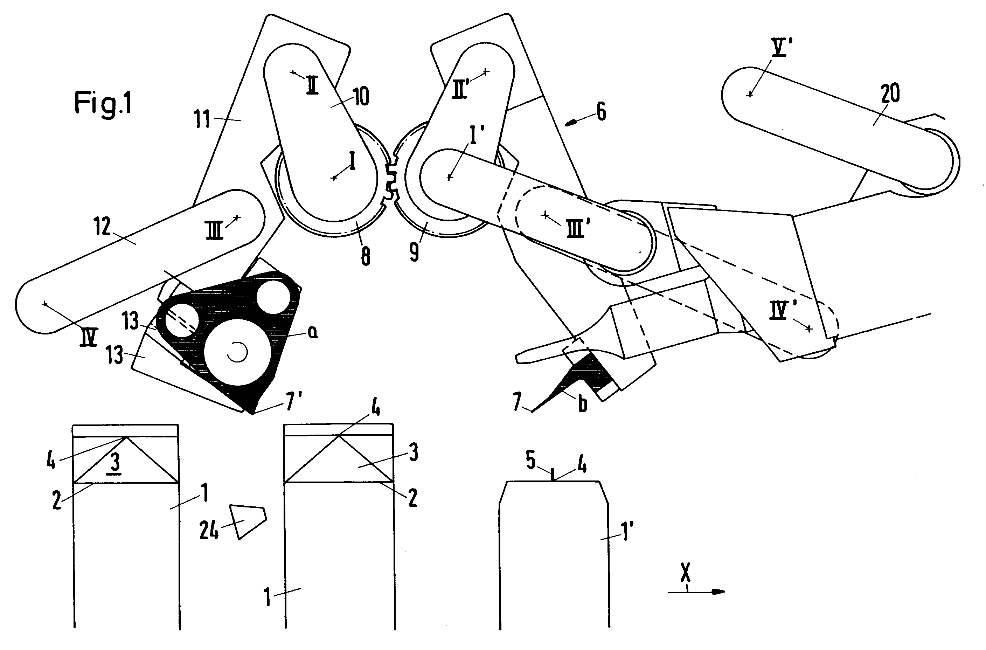

Über einem nicht dargestellten Förderband, welches sich horizontal in positive Richtung X bewegt, stehen drei Packungen 1 bzw. 1', wobei die Packung 1' bereits fertig gefaltet und mit zugeschweißter Quersiegelnaht versehen ist. Bei der hier dargestellten Ausführungsform ist der Deckel der Packung unten angeordnet, die Packung wurde durch den Boden gefüllt, und die stirnseitigen Wandungen sind also die Bodenwandungen, welche durch die Grenzfaltlinie 2 gegenüber den Tubusseitenwänden abgegrenzt sind. Diese Grenzfaltlinie 2 verläuft in X-Richtung, während in Fig. 5 die Grenzfaltlinie 2' in Z-Richtung verläuft. Die Z-Richtung steht senkrecht auf der Papierebene der Fig. 1 bis 4 und 7, 7a.

Die dreieckigen Giebelflächen sind mit 3 bezeichnet und haben außen oben eine gegen über der Grenzfaltlinie 2 befindliche Spitze 4, welche in Z-Richtung bzw. -Z-Richtung (Fig. 5) herausgefaltet werden soll. Im Zustand der Packung 1' ist die Faltung abgeschlossen, so daß man die Giebelspitze 4 direkt unterhalb der Querschweißnaht 5 erkennt. Die Längsschweißnaht der Packung ist übrigens in Fig. 5 mit 6 bezeichnet.

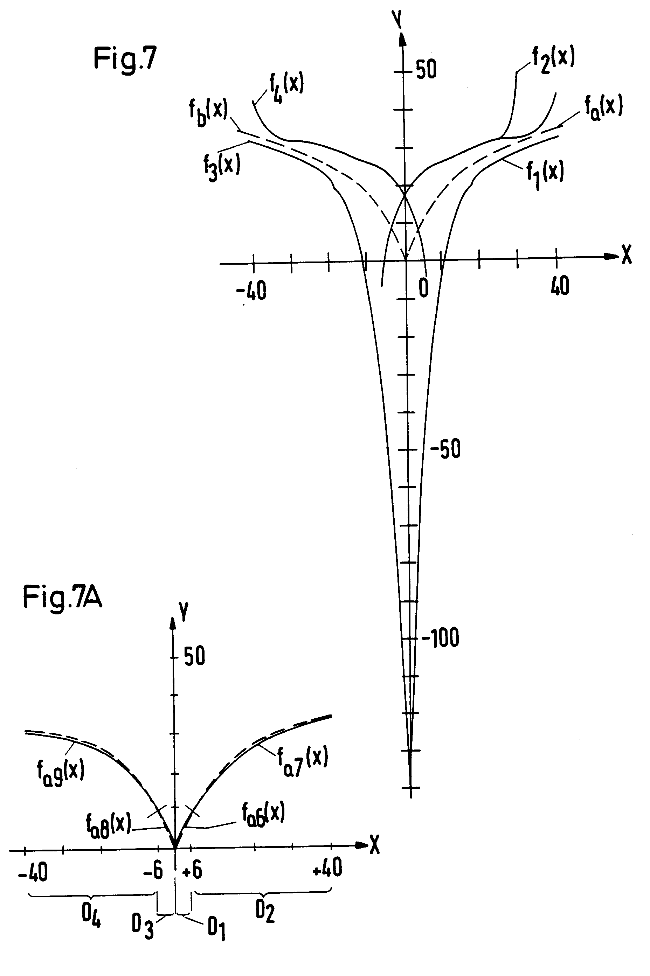

Damit die Stirnseite 2 - 4 der Packung 1 eingefaltet werden kann, werden das Faltblech b und der Amboß a über eine allgemein mit 6 bezeichnete Hebelmechanik derart bewegt, daß sich die Faltkanten 7 des Faltbleches b und 7' des Ambosses a auf vorgegebenen, gekrümmten Bahnen verlaufen. In Fig. 1 befinden sich Faltblech b und Amboß a im zurückgezogenen Ruhezustand, von wo aus die Faltkanten 7, 7' in den Anfangsbereich des Faltvorganges eintreten können, der in den Figuren 7 und 7a im Abstand vom Nullpunkt O am äußeren Ende der dort angegebenen Kurven liegt.

Für die synchrone Bewegung des Hebelmechanismus 6 sind ein Antriebszahnrad 8 und ein mit diesem in Kämmeingriff stehendes Abtriebszahnrad 9 vorgesehen. Eine fest mit dem Antriebszahnrad 8 verbundene Antriebskurbel 10 ist um den stationären Drehpunkt I so schwenkbar, daß damit am äußeren Ende der Antriebskurbel 10 der Drehpunkt II auf einem Kreis bewegt werden kann, an welchem der amboßseitige Verbindungshebel 11 angelenkt ist. Dieser ist außerdem am beweglichen Drehpunkt III einer amboßseitigen Faltführungsstange 12 angelenkt, die um den stationären Drehpunkt IV schwenkbar ist. Damit ist sowohl die Bewegung der fest am Verbindungshebel 11 angebrachten Halterung 13 als auch des Ambosses a vorgegeben, der von der Halterung abgestützt wird.

Auf der Faltblechseite befinden sich ähnliche Bauteile, welche um die stationäre Drehachse I', die bewegliche Drehachse II', die bewegliche Drehachse III', den stationären Drehpunkt IV' und den stationären Drehpunkt V' schwenkbar sind.

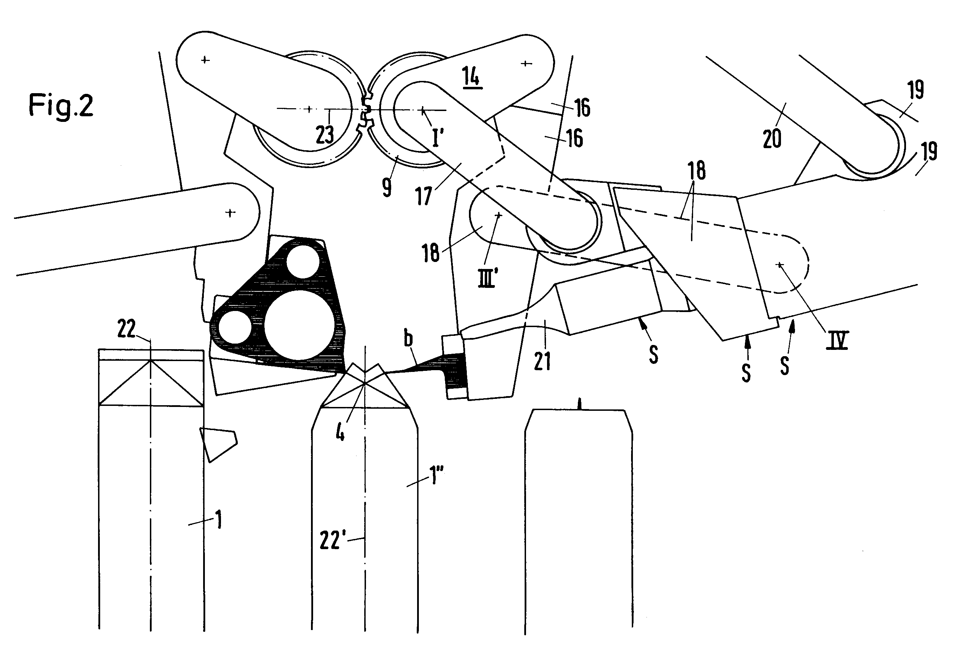

Während man die Drehachsen (Drehpunkte) der Teile am besten immer aus Fig. 1 abliest, werden die faltblechseitigen Bauteile nun anhand Fig. 2 beschrieben.

Mit dem abgetriebenen Zahnrad 9 ist eine Abtriebskurbel 14 fest verbunden, welche analog wie auf der Amboßseite auch hier auf der Faltblechseite den Verbindungshebel 15 antreibt, an dessen unterem Ende das Faltblech b befestigt ist. Auch hier ist eine Faltführungsstange 18 am beweglichen Drehpunkt III' angelenkt und kann um den stationären Drehpunkt IV' schwenken.

Unabhängig von der Bewegung der Abtriebskurbel 14 kann sich um den Drehpunkt I' ein Führungshebel 17 drehen, an welchem die allgemein mit S bezeichnete Sonotrodeneinheit angelenkt ist. Parallel zu diesem Führungshebel 17 für die Sonotrodeneinheit ist letztere über ihr Konvertergeh äuse 19 an einem Antriebshebel 20 angelenkt, der auch in Fig. 1 wiedergegeben ist mit seinem stationären Drehpunkt V.

Separat von der Abtriebskurbel 14 kann also der Führungshebel 17 für die Sonotrodeneinheit S und der parallel dazu angeordnete Antriebshebel 20 bewegt werden, die sich parallelogrammartig bewegen, zumal die Hebel 20 und 17 gleich lang sind. Man erkennt also, daß sich die Sonotrodeneinheit S mitsamt der Sonotrode 21 getrennt vom Faltblech b bewegen kann und angetrieben wird.

In Fig. 2 ist darüberhinaus die mittlere Packung 1" in einem mittleren Faltzustand dargestellt, bei welcher die Vorderkanten 7 und 7' des Faltbleches b und des Ambosses a die Faltung schon bis über die Hälfte durchgeführt haben, weshalb die Giebelspitze 4 bereits auf der Packungslängsmittellinie 22' im Vergleich zur Mittellinie 22 der Packung 1 nach unten bewegt hat. Es versteht sich, daß sich die Packungsl ängsmittellinie 22 jeweils mit der Packung mitbewegt. Im Zustand der Mittellinie 22' befindet sich diese in der Y-Z-Ebene, die durch den Nullpunkt geht, wie man anhand Fig. 7 sieht. Diese Mittellinie 22' liegt auch in der durch den Nullpunkt gehenden Y-Z-Ebene, welche die Verbindungslinie 23 zwischen den Zahnraddrehpunkten I, I' senkrecht schneidet.

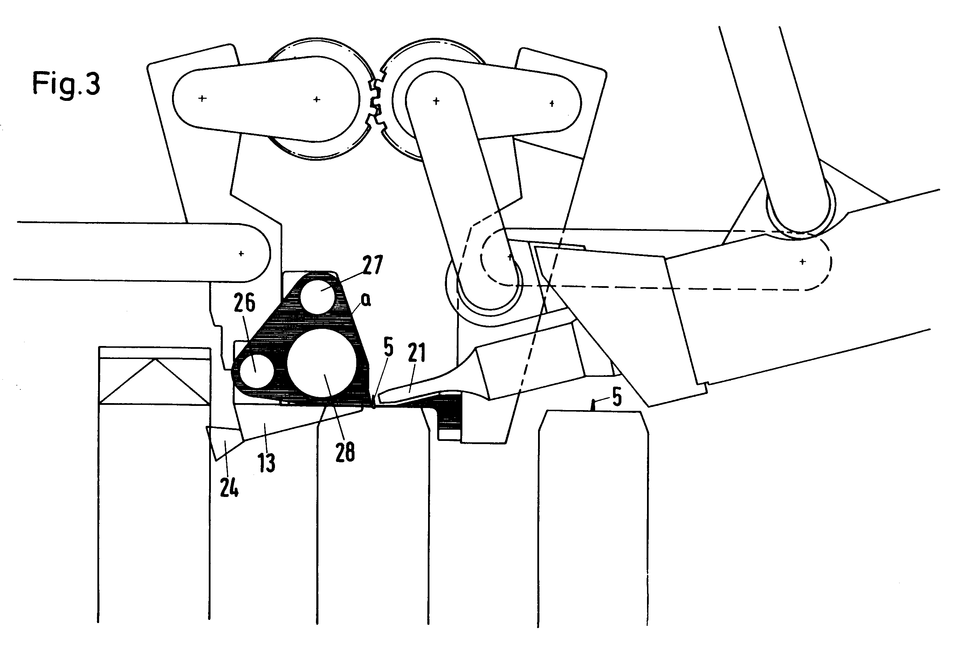

Im Zustand der Fig. 3 ist die Faltung zuendegeführt, und die Halterung 13 für den Amboß a hat sich gegen den stationären Anschlag 24 angelegt, um ohne Belastung des Verbindungshebels 11 und seiner Lagerungen auch einem Schweißdruck einwandfrei und präzise standzuhalten, der von der Sonotrode 21 ausgeübt wird, die über das flache Faltblech b hinwegfahren und die Quersiegelnaht 5 einklemmen und verschweißen kann.

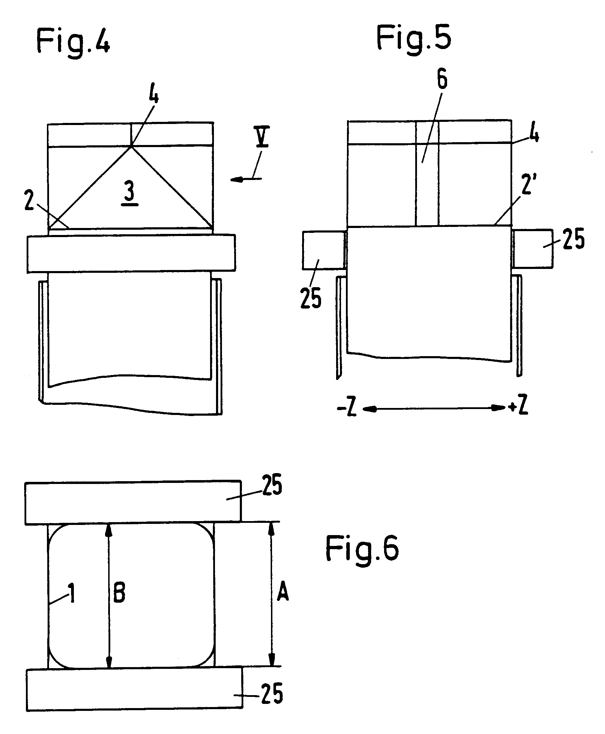

Die zwei Zentrierleisten 25 befinden sich im Bereich der durch den Nullpunkt gehenden Y-Z-Ebene, sind aber zur einfacheren Darstellung in den Fig. 1 bis 3 nicht gezeigt. Sie werden anhand der Fig. 4 bis 6 erläutert. Die in den Fig. 4 und 6 von der Seite bzw. oben gesehenen länglichen Zentrierleisten 25 erstrecken sich in X-Richtung, in welche man bei der Ansicht der Fig. 5 blickt, und zwar vom ersten in den zweiten Quadranten, also in Richtung -X.

Die Oberkante der beiden Zentrierleisten 25 liegt um 1 bis 5 mm, vorzugsweise 1,5 bis 3 mm, unter der Grenzfaltlinie 2 zwischen dem unten abgebrochen dargestellten Tubus der Packung und dem oberen stirnseitigen Bereich 2, 4, 6. Außerdem stehen die beiden Zentrierleisten 25 in der Darstellung der Fig. 6 in Z-Richtung in einem bestimmten Abstand A, der beispielsweise 67 mm beträgt für eine konkrete Ausführungsform, bei welcher die Breite B der Packung 1 70 mm beträgt. Dadurch ergibt sich das Verhälts V vom Abstand A zur Breite B der Packung von 0,95. Dies bedeutet, daß beim Einfahren der Packung 1 zwischen die beiden Zentrierleisten 25 in Richtung +X seitlich leicht zusammengedrückt wird, so daß die effektive Breite B der Packung zwischen den Zentrierleisten dann ebenfalls nur 67 mm beträgt. Die sich daraus ergebenden vorteilhaften Spannungserhöhungen im Bereich der Grenzfaltlinie 2' (Fig. 5) wurden oben schon erläutert.

Nach Fertigstellung der Faltung verläßt die Packung 1' die Zentrierleisten 25.

In Fig. 7 sind in einem Diagramm der X-Y-Achsen die verschiedenen Kurven dargestellt, die sich für die Bewegungsbahnen ergeben. Der Bereich des dritten und vierten Quadranten für alle Werte y < 0 ist nicht von Interesse und kann daher bei der folgenden Beschreibung entfallen, wie dieser Bereich auch schon in Fig. 7a entfallen und nicht gezeichnet ist.

In Fig. 7 ist der Nullpunkt O an der Schnittstelle zwischen den Achsen X und Y zwischen den Werten -40 und +40 auf der X-Skala angezeigt. Beispielsweise kann man sich die Zahlenwerte als Millimeter-Angaben vorstellen. Von der X- und Y-Achse wird die Papierebene aufgespannt, die Z-Achse steht senkrecht auf der Papierebene. Ihr Ursprung geht ebenfalls durch den Nullpunkt O. Der Nullpunkt stellt die Endfaltposition dar, bei welcher die Vorderkanten 7 und 7' des Faltbleches b und des Ambosses a die Position gemäß Fig. 3 erreicht haben, also die Quersiegelnaht 5 fertig gefaltet ist. Deshalb handelt es sich hier um den Endbereich. Die optimalen Bewegungsbahnen sind in Fig. 7 die gestrichelt gezeichneten Kurven $f_a(x)$ und $f_b(x)$. Folgt man diesen Kurven vom Nullpunkt aus nach außen, so durchläuft man Zwischenpositionen, wie sie beispielsweise in Fig. 2 für das Faltblech b und den Amboß a dargestellt sind. Noch weiter nach außen, d.h. von der Y- und X-Achse entfernt, gelangt man auf der gestrichelten Linie in den Anfangsbereich des Faltvorganges, der bei der Darstellung des Faltbleches b und des Ambosses a in Fig. 1 sogar schon überschritten ist, denn dort befinden sich die Vorderkanten 7 und 7' in einer Ruheposition, in welcher sie nicht einmal mit der Packung in Eingriff stehen. Die Packung 1 hat sich noch nicht einmal an die richtige Position bewegt, die in den Fig. 2 und 3 erst von der Packung erreicht ist.

Die idealen Bewegungsbahnen $f_a(x)$ und $f_b(x)$, d. h. die Bahnen der Vorderkante 7 des Faltbleches b ($f_a(x)$) und im

zweiten Quadranten der Vorderkante 7' des Ambosses a (Bahn $f_b(x)$) sind gestrichelt gezeichnete Kurven, die sich in Fig. 1 in einem Flächenbereich bewegen. Der Flächenbereich für das Faltblech b und damit die Bewegungsbahn $f_a(x)$ ist begrenzt durch die Kurven $y_1 = f_1(x)$ unten und $y_2 = f_2(x)$ oben, alles im ersten Quadranten.

Die Bewegungsbahn $f_b(x)$ für den Amboß verläuft im zweiten Quadranten in einem Flächenbereich, der begrenzt wird durch die Kurven $y_3 = f_3(x)$ und $y_4 = f_4(x)$.

In konkreten Zahlenwerten ausgedrückt heißen die Begrenzungskurven wie folgt:

$$y_1 = f_1(x) = -135{,}066 + 23{,}452x - 1{,}398x^2 + 0{,}041922x^3 - 6{,}183 \cdot 10^{-4}x^4 + 3{,}571 \cdot 10^{-6}x^5$$

$$y_2 = f_2(x) = 17{,}312 - 2{,}002x - 0{,}213x^2 + 1{,}355 \cdot 10^{-2}x^3 - 4{,}022 \cdot 10^{-4}x^4 + 4{,}386 \cdot 10^{-6}x^5$$

$$y_3 = f_3(x) = -135{,}066 - 23{,}452x - 1{,}398x^2 - 0{,}041922x^3 - 6{,}183 \cdot 10^{-4}x^4 - 3{,}571 \cdot 10^{-6}x^5$$

$$y_4 = f_4(x) = 17{,}312 - 2{,}002x - 0{,}213x^2 - 1{,}355 \cdot 10^{-2}x^3 - 4{,}022 \cdot 10^{-4}x^4 - 4{,}386 \cdot 10^{-6}x^5$$

In Fig. 7a sind für den ersten Quadranten zwei Definitionsbereiche $D_1$ und $D_2$ gezeigt für die x-Werte; und für den zweiten Quadranten zwei weitere Definitionsbereiche für die x-Werte, nämlich $D_3$ und $D_4$.

Für den ersten Quadranten bedeutet dies, daß die ideale Bewegungsbahn $f_a(x)$ nicht durch eine einzige Funktion dargestellt werden kann, sondern in zwei Abschnitte unterteilt wird, nämlich den näher am Nullpunkt liegenden Abschnitt mit dem Definitionsbereich $D_1$ als Kurve $f_{a6}(x)$ und den etwas weiter entfernt liegenden Abschnitt für den Definitionsbereich $D_2$ mit der Kurve $f_{a7}(x)$.

Für den zweiten Quadranten gilt Entsprechendes. Auch dort ist die ideale Kurve $f_b(x)$ für die Vorderkante 7' des Ambosses a unterteilt in zwei Teilkurven, nämlich die nahe dem Nullpunkt im Definitionsbereich $D_3$ für die x-Werte und etwas weiter entfernt von der Y-Achse der Definitionsbereich $D_4$ für die Funktion $f_{a9}(x)$.

Konkret in Zahlen ausgedrückt gilt für den ersten Quadranten:

$$f_{a6}(x) = -8{,}7013 + 14{,}224x - 3{,}4512x^2 + 0{,}40883x^3 - 0{,}017696x^4.$$

Der äußere und bis in den Anfangsfaltbereich reichende Kurvenzweig ist dann durch folgende Kurve definiert:

$$f_{a7}(x) = 10{,}216 + 1{,}5685x - 0{,}046046x^2 + 0{,}68195 \cdot 10^{-3}x^3 - 0{,}39415 \cdot 10^{-5}x^4.$$

Für den zweiten Quadranten gilt analog:

$$f_{a8}(x) = -8{,}7013 - 14{,}224x - 3{,}4512x^2 - 0{,}40883x^3 - 0{,}017696x^4, \text{ und}$$

für den äußeren Kurvenzweig gilt:

$$f_{a9}(x) = 10{,}216 - 1{,}5685x - 0{,}046046x^2 - 0{,}68195 \cdot 10^{-3}x^3 - 0{,}39415 \cdot 10^{-5}x^4.$$

Im Betrieb wird eine betrachtete Packung 1 in Richtung der X-Achse in eine Position gemäß Darstellung der Figur 1 (die mittlere Packung) gefördert, bei welcher Faltblech b und Amboß a noch in ihren äußeren Ruhestellungen stehen.

Während die Packung 1 weiter in X-Richtung so weit vorgeschoben wird, daß ihre vertikale Längsmittelachse 22' in der Y-Z-Ebene zu liegen kommt, bewegen sich die Vorderkanten 7 und 7' des Faltbleches b und des Ambosses a bis an die obere Faltkante der Bodenfaltfelder der Packung 1 heran, welche durch die obere Dreieckspitze 4 geht und parallel zur Grenzfaltlinie 2 verläuft. In diesem Augenblick beginnt die Faltung durch das Zusammendrücken über die sich aufeinanderzubewegenden Faltteile b und a. Der Punkt 4 der Giebelspitze des Giebelfeldes 3 bewegt sich in der Y-Z-Achse nach unten, während die Grenzfaltlinie 2 in der in den Fig. 4 bis 6 gezeigten Weise von den Zentrierleisten 25 gehaltert wird. Diese Einfaltung wird fortgesetzt bis zur Position der Fig. 2. Aber auch das ist nur eine Zwischenposition. Der Punkt 4 wandert weiter in der Y-Z-Ebene nach unten, bis die Endfaltposition der Fig. 3 erreicht ist.

Inzwischen hat sich die Sonotrode 21 auf einer anderen Bewegungsbahn mittels des Parallelogrammgestänges 17, 20 in die Position der Fig. 3 bewegt, und kurz danach wird der doppelte Kartonstreifen der Packung oben zwischen Sonotrodenvorderkante 21 und Gegenfläche des Ambosses a eingeklemmt und verschweißt. Dadurch entsteht die Quersiegelnaht 5. Die Vorderkanten 7 und 7' von Faltblech b und Amboß a bewegen sich danach auf den Kurven $f_a(x)$ bzw. $f_b(x)$ wieder zurück, und die Packung 1' gelangt in die in Fig. 1 rechts gezeigte Position, von der aus sie weiter abgefördert wird.

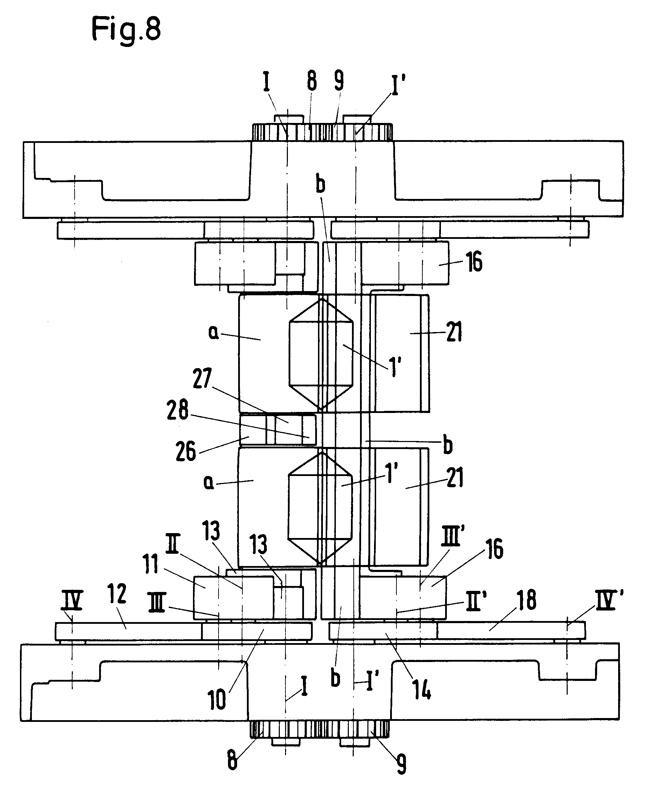

Es ist auch möglich, zwei Packungsreihen gleichzeitig in Richtung der X-Achse in die Einfaltposition zu bewegen, wenn nämlich zwei Faltbleche b und zwei Ambosse a in Z-Richtung hintereinander angeordnet werden, wie dies in der Draufsicht der Vorrichtung in Fig. 8 dargestellt ist. Man erkennt dort die oben beschriebenen Bauteile und Achsen entsprechend wieder. Dabei versteht sich, daß die Ambosse a von Stützwellen 26, 27 und 28 gehaltert werden.

Die verschiedenen Bewegungspositionen der Faltführungsstange 12, des Führungshebels 17, der Faltführungsstange 18, der Verbindungshebel 11 und 16 usw. erkennt man aus den Fig. 1 bis 3.

## Patentansprüche

1. Vorrichtung zum Einfalten der Stirnseite einer Packung (1, 1') aus mit Kunststoff beschichtetem Kartonmaterial, deren Stirnseite im eingefalteten Zustand in Draufsicht im wesentlichen viereckig ist und eine umfaltbare Quersiegelnaht (5) hat, mit einem Faltteil (b) und einem Gegenfaltteil (a), die beide mittels wenigstens einer Hebelmechanik (8 - 16) entlang bestimmter Bewegungsbahnen ($f_a[x]$, $f_b[x]$) bewegbar angetrieben und jeweils an mindestens einem gesteuert angetriebenen Verbindungsteil (11, 16) befestigt sind und unter welchen in Y-Richtung im Abstand ein die Packungen (1, 1') in X-Richtung bewegender Förderer angeordnet ist, wobei die Y-Achse senkrecht auf der X-Achse steht, der Nullpunkt (O) der Achsen (X, Y) in der Endfaltposition der beiden Faltteile (a, b) liegt und eine sich in Z-Richtung erstreckende Y-Z-Ebene in der Y-Achse liegt und von der X-Achse senkrecht geschnitten wird, wobei die Bewegungsbahnen ($f_a[x]$, $f_b[x]$) beider Faltteile (a, b) bezüglich der Y-Z-Ebene symmetrisch zueinander verlaufen und sich die Bewegungsbahnen ($f_a[x]$, $f_b[x]$) in der X-Y-Ebene als eine Überlagerung einer translatorischen und einer rotatorischen Bewegung des jeweiligen Fattels (a, b) beschreiben lassen, **dadurch gekennzeichnet,** daß

   a) die Bewegungen beider Faltteile (a, b) von einem einzigen Antriebszahnrad (8) abgeleitet sind,
   b) ein Faltteil (Amboß a) von beiden Seiten gelagert ist,
   c) symmetrisch zum Nullpunkt der beiden Achsen (X, Y) eine Zentriereinrichtung (25) für die Packung (1, 1') angeordnet ist und
   d) der Raum der Einfaltvorrichtung über der Zentriereinrichtung (25)

   vor dem Einfalten frei von Bauteilen ist.

2. Vorrichtung nach Anspruch 1, **dadurch gekennzeichnet**, daß jede Bewegungsbahn ($f_a[x]$, $f_b[x]$) im Anfangsbereich unter einem Winkel von weniger als 45°, vorzugsweise weniger als 30° gegenüber der X-Achse und im Endbereich unter einem Winkel von mehr als 45°, vorzugsweise mehr als 60° gegen die X-Achse verläuft (Fig. 7).

3. Vorrichtung nach Anspruch 1 oder 2, **dadurch gekennzeichnet**, daß jede Bewegungsbahn ($f_a[x]$, $f_b[x]$) zwischen dem Anfangs- und dem Endbereich einen kontinuierlichen Übergang hat (Fig. 7).

4. Vorrichtung nach einem der Ansprüche 1 bis 3, **dadurch gekennzeichnet**, daß die Bewegungsbahn ($f_a[x]$) des Faltteils (b) im ersten Quadranten der X-Y-Ebene (x > 0, y > 0) in einem Flächenbereich verläuft, der zusätzlich begrenzt wird durch die Kurven

$$y_1 = f_1(x)$$

$$y_2 = f_2(x) \text{ mit}$$

$$f_1(x) = a_1 + b_1 x - c_1 x^2 + d_1 x^3 - e_1 x^4 + g_1 x^5 \text{ und}$$

$$f_2(x) = a_2 + b_2 x - c_2 x^2 + d_2 x^3 - e_2 x^4 + g_2 x^5$$

und die Bewegungsbahn ($f_b[x]$) des Gegenfaltteiles (a) im zweiten Quadranten der X-Y-Ebene (x < 0, y > 0) in einem Flächenbereich verläuft, der zusätzlich begrenzt ist durch die Kurven

$$f_3(x) = a_1 - b_1 x - c_1 x^2 - d_1 x^3 - e_1 x^4 - g_1 x^5$$

$$f_4(x) = + a_2 - b_2 x - c_2 x^2 - d_2 x^3 - e_2 x^4 - g_2 x^5 \text{ wobei gilt}$$

$$a_1 = -135,006$$

$$b_1 = + 23,452$$

$$c_1 = +1{,}398$$

$$d_1 = +0{,}041922$$

$$e_1 = +6{,}183 \times 10^{-4}$$

$$g_1 = +3{,}571 \times 10^{-6}$$

$$a_2 = +17{,}312$$

$$b_2 = +2{,}002$$

$$c_2 = +0{,}213$$

$$d_2 = +1{,}355 \times 10^{-2}$$

$$e_2 = +4{,}022 \times 10^{-4}$$

$$g_2 = +4{,}386 \times 10^{-6}.$$

5. Vorrichtung nach einem der Ansprüche 1 bis 4, **dadurch gekennzeichnet**, daß die Bewegungsbahn ($f_a[x]$) des Faltteils duirch die Kurve

$$y_{a6} = f_{a6}(x) \text{ mit}$$

$$f_{a6}(x) = -a_3 + b_3 x - c_3 x^2 + d_3 x^3 - e_3 x^4 \text{ für}$$

$$D_1 \{x/0 \leq x \leq 6\}$$

$$y_{a7} = f_{a7}(x) \text{ mit}$$

$$f_{a7}(x) = a_4 + b_4 x - c_4 x^2 + d_4 x^3 - e_4 x^4$$

und die Bewegungsbahn ($f_b[x]$) des Gegenfaltteils durch die Kurve

$$f_{a8}(x) = -a_3 + b_3 x - c_3 x^2 - d_3 x^3 - e_3 x^4 \text{ für}$$

$$D_3 \{x/-6 \leq x \leq 0\} \text{ und}$$

$$fa_{a9}(x) = a_4 - b_4 x - c_4 x^2 - d_4 x^3 - e_4 x^4$$

$D_4 \{x/-40 \leq x \leq -6\}$ beschrieben werden, wobei gilt

$$a_3 = 8{,}7013$$

$$b_3 = 14{,}224$$

$$c_3 = 3{,}4512$$

$$d_3 = 0{,}40883$$

$$e_3 = 0{,}017696$$

$$a_4 = 10{,}216$$

$$b_4 = 1{,}5685$$

$$c_4 = 0{,}046046$$

$$d_2 = 0,68195 \times 10^{-3}$$

$$e_4 = 0,39415 \times 10^{-5}.$$

6. Vorrichtung nach einem der Ansprüche 1 bis 5, **dadurch gekennzeichnet**, daß die Länge jeder Bewegungsbahn ($f_a[x]$, $f_b[x]$) in X-Richtung etwa größer gleich der halben Länge des Bodens ini X-Richtung ist.

7. Vorrichtung nach einem der Ansprüche 1 bis 6, **dadurch gekennzeichnet**, daß die Zentriereinrichtung (25) zwei parallel und in Z-Richtung im Abstand (a) zueinander und sich in Förderrichtung (in X-Richtung) der Packung (1, 1') erstreckende Zentrierleisten (25) aufweist, wobei die Zentriereinrichtung (25) vorzugsweise an jeder Zentrierleiste midestens eine Faltkante aufweist.

8. Vorrichtung nach einem der Ansprüche 1 bis 6, **dadurch gekennzeichnet**, daß das Verhältnis (V) von Abstand (A) zwischen den Zentrierleisten und Breite (B) der Packung in Richtung (Z-Richtung) quer zu ihrer Förderrichtung 0,95 beträgt.

9. Vorrichtung nach einem der Ansprüche 1 bis 7, **dadurch gekennzeichnet**, daß der Verbindungshebel (11) des Gegenfaltteiles (a) über einen ersten Drehpunkt (III) mit einem Ende einer abgetriebenen` an ihrem gegenüberliegenden Ende an einem stationären Drehpunkt (IV) gelagerten Faltführungsstange (12) und über einen zweiten Drehpunkt (II) mit einer Antriebskurbel (10) verbunden ist, die an einem Antriebszahnrad (8) befestigt ist, das mit dem Abtriebszahnrad (9) des anderen Verbindungshebels (16) so im Kämmeingriff steht, daR die Y-Z-Ebene senkrecht zur Verbindungslinie (I-I') der Zahnraddrehpunkte (I,m I') steht (Fig. 3).

10. Vorrichtung nach einem der Ansprüche 1 bis 8, **dadurch gekennzeichnet**, daß das Faltteil (b) nach vorn im Querschnitt verjüngt zur Form einer Platte ausläuft und daß das Gegenfaltteil (a) als Amboß ausgestaltet ist, gegen welche eine Sonotrode (21) mit einer Bewegungsbahn andrückbar ist, die sich vorzugsweise von der Bewegungsbahn ($f_a[x]$) des Faltteils (b) zeitlich und/oder örtlich unterscheidet.

## Claims

1. Apparatus for folding in the end of a pack (1, 1') of plastics-coated card material, whose end in the folded-in condition is substantially quadrangular in plan view and has a transverse sealing seam (5) which can be folded over, having a folding portion (b) and a counter-folding portion (a) which are both driven movably by means of at least one lever mechanism (8-16) along given paths of movement ($f_a[x]$,$f_b[x]$) and are respectively fixed to at least one controlledly driven connecting portion (11, 16) and below which in the Y-direction at a spacing is arranged a conveyor which moves the packs (1, 1') in the X-direction, wherein the Y-axis is perpendicular to the X-axis, the zero point (O) of the axes (X, Y) is in the final fold position of the two folding portions (a, b) and a Y-Z-plane extending in the Z-direction lies on the Y-axis and is perpendicularly intersected by the X-axis, wherein the paths of movement ($f_a[x]$,$f_b[x]$) of both folding portions (a, b) extend symmetrically relative to each other with respect to the Y-Z-plane and the paths of movement ($f_a[x]$,$f_b[x]$) in the X-Y-plane can be described as a superimposition of a translatory movement and a rotary movement of the respective folding portion (a, b), characterised in that

    a) the movements of both folding portions (a, b) are derived from a single drive gear (8),
    b) a folding portion (anvil a) is mounted from both sides,
    c) a centering device (25) for the pack (1, 1') is arranged symmetrically relative to the zero point of the two axes (X, Y), and
    d) the space of the folding-in apparatus above the centering device (25) prior to the folding-in operation is free of components.

2. Apparatus according to claim 1 characterised in that each path of movement ($f_a[x]$,$f_b[x]$) extends in the initial region at an angle of less than 45°, preferably less than 30°, relative to the X-axis, and in the end region at an angle of more than 45°, preferably more than 60°, relative to the X-axis (Figure 7).

3. Apparatus according to claim 1 or claim 2 characterised in that each path of movement ($f_a[x]$,$f_b[x]$) has a continuous transition between the initial and the end regions (Figure 7).

4. Apparatus according to one of claims 1 to 3 characterised in that the path of movement ($f_a[x]$), of the folding portion (b) extends in the first quadrant of the X-Y-plane (x> 0, y > 0) in a surface region which is additionally delimited by

the following curves:

$$y_1 = f_1(x)$$

$$y_2 = f_2(x) \text{ with}$$

$$f_1(x) = a_1 + b_1x - c_1x^2 + d_1x^3 - e_1x^4 + g_1x^5 \text{ and}$$

$$f_2(x) = a_2 + b_2x - c_2x^2 + d_2x^3 - e_2x^4 + g_2x^5$$

and the path of movement ($f_b[x]$) of the counter-folding portion (a) extends in the second quadrant of the X-Y-plane ($x < 0$, $y > 0$) in a surface region which is additionally delimited by the following curves:

$$f_3(x) = a_1 - b_1x - c_1x^2 - d_1x^3 - e_1x^4 . g_1x^5$$

$$f_4(x) = + a_2 - b_2x - c_2x^2 - d_2x^3 - e_2x^4 - g_2x^5 \text{ wherein}$$

$$a_1 = -135.006$$

$$b_1 = + 23.452$$

$$c_1 = + 1.398$$

$$d_1 = + 0.041922$$

$$e_1 = + 6.183 \times 10^{-4}$$

$$g_1 = + 3.571 \times 10^{-6}$$

$$a_2 = + 17.312$$

$$b_2 = + 2.002$$

$$c_2 = + 0.213$$

$$d_2 = + 1.355 \times 10^{-2}$$

$$e_2 = + 4.022 \times 10^{-4}$$

$$g_2 = + 4.386 \times 10^{-6}.$$

5. Apparatus according to one of claims 1 to 4 characterised in that the path of movement ($f_a[x]$) of the folding portion is described by the curve:

$$y_{a6} = f_{a6}(x) \text{ with}$$

$$f_{a6}(x) = -a_3 + b_3x - c_3x^2 + d_3x^3 - e_3x^4 \text{ for}$$

$$D_1 \{x/0 \leq x \leq 6\}$$

$$y_{a7} = f_{a7}(x) \text{ with}$$

$$f_{a7}(x) = a_4 + b_4x - c_4x\, d_{4113} - e_4x^4$$

and the path of movement ($f_b[x]$) of the counter-folding portion is described by the curve:

$$f_{a8}(x) = -a_3 + b_3x - c_3x^2 - d_3x^3 - e_3x^4 \text{ for}$$

$$D_3 \{x/-6 \leq x \leq 0\} \text{ and}$$

$$fa_{a9}(x) = a_4 - b_4 x - c_4 x^2 - d_4 x^3 - e_4 x^4$$

$$D_4 \{x/-40 \leq x \leq -6\} \text{ wherein}$$

$$a_3 = 8.7013$$

$$b_3 = 14.224$$

$$c_3 = 3.4512$$

$$d_3 = 0.40883$$

$$e_3 = 0.017696$$

$$a_4 = 10.216$$

$$b_4 = 1.5685$$

$$c_4 = 0.046046$$

$$d_2 = 0.68195 \times 10^{-3}$$

$$e_4 = 0.39415 \times 10^{-5}.$$

6. Apparatus according to one of claims 1 to 5 characterised in that the length of each path of movement $(f_a[x], f_b[x])$ in the X-direction is somewhat greater than or equal to half the length of the bottom in the X-direction.

7. Apparatus according to one of claims 1 to 6 characterised in that the centering device (25) has two centering bars (25) which extend parallel and at a spacing (a) relative to each other in the Z-direction and in the conveying direction (in the X-direction) of the pack (1, 1'), wherein the centering device (25) preferably has at least one folding edge on each centering bar.

8. Apparatus according to one of claims 1 to 6 characterised in that the ratio (V) of the spacing (A) between the centering bars and the width (B) of the pack in the direction (Z-direction) transverse to the conveying direction thereof is 0.95.

9. Apparatus according to one of claims 1 to 7 characterised in that the connecting lever (11) of the counter-folding portion (a) is connected by way of a first pivot (III) to an end of a driven folding guide bar (12) mounted at its opposite end to a stationary pivot (IV) and by way of a second pivot (II) to a drive crank (10) which is fixed to a drive gear (8) which is in meshing engagement with the output drive gear (9) of the other connecting lever (16) in such a way that the Y-Z-plane is perpendicular to the connecting line (I-I') between the gear pivots (I, m, I') (Figure 3).

10. Apparatus according to one of claims 1 to 8 characterised in that the folding portion (b) tapering forwardly in cross-section terminates in the form of a plate and that the counter-folding portion (a) is in the form of an anvil against which a sonotrode (21) can be pressed with a path of movement which preferably differs in terms of time and/or location from the path of movement $(f_a[x])$ of the folding portion (b).

**Revendications**

1. Dispositif pour plier la face frontale d'un emballage (1, 1') en un matériau de type carton enduit de plastique, dont la face frontale, à l'état plié, présente en vue de dessus une forme essentiellement rectangulaire, et possède un joint thermoscellé transversal (5) repliable, avec une pièce de pliage (b) et une contrepièce de pliage (a), qui toutes les deux sont mises en mouvement à l'aide d'au moins un mécanisme de levier (8-16) le long de certaines trajectoires $(f_a[x], f_b[x])$, et dont chacune est fixée à au moins une pièce de raccordement (11, 16), entraînée d'une manière régulée, et en-dessous desquelles, dans la direction Y, et à une certaine distance, est disposé un transporteur qui déplace dans la direction X les emballages (1, 1'), l'axe des Y étant perpendiculaire à l'axe des X, l'origine (O) des axes (X, Y) se trouvant dans la position de pliage final des deux pièces de pliage (a, b), et un plan Y-Z, s'étendant dans la direction Z, se trouvant dans l'axe Y et étant coupé selon un angle droit par l'axe X, où les trajectoires ($f_a[x]$, $f_b[x]$) des deux pièces de pliage (a, b) sont symétriques l'une par rapport à l'autre et par rapport au plan Y-Z, et les trajectoires ($f_a[x]$, $f_b[x]$) dans le plan X-Y peuvent être décrites comme une superposition d'un mouvement de translation et d'un mouvement de rotation de la pièce de pliage considérée (a, b), caractérisé en ce que

a) les mouvements des deux pièces de pliage (a, b) sont réalisés par une roue dentée d'entraînement unique (8),

b) une pièce de pliage (enclume a) est logée des deux côtés,

c) symétriquement à l'origine des deux axes (X, Y), on a disposé un dispositif de centrage (25) pour l'emballage (1, 1'), et

d) l'espace du dispositif de pliage au-dessus du dispositif de centrage (25) est, avant pliage, exempt de composants.

2. Dispositif selon la revendication 1, caractérisé en ce que chaque trajectoire ($f_a[x]$, $f_b[x]$) court, dans la zone initiale, selon un angle inférieur à 45° et de préférence inférieur à 30° par rapport à l'axe des X, et, dans la zone finale, court selon un angle supérieur à 45° et de préférence supérieur à 60° par rapport à l'axe des X (Figure 7).

3. Dispositif selon la revendication 1 ou 2, caractérisé en ce que chaque trajectoire ($f_a[x]$, $f_b[x]$) possède une transition continue entre la zone initiale et la zone finale (Figure 7).

4. Dispositif selon l'une des revendications 1 à 3, caractérisé en ce que la trajectoire ($f_a[x]$) de la pièce de pliage (b) court dans le premier quadrant du plan X-Y ($x > 0$, $y > 0$) dans une surface qui en outre est délimitée par les courbes :

$$y_1 = f_1(x)$$

$$y_2 = f_2(x), \text{ où}$$

$$f_1(x) = a_1 + b_1 x - c_1 x^2 + d_1 x^3 - e_1 x^4 + g_1 x^5 \text{ et}$$

$$f_2(x) = a_2 + b_2 x - c_2 x^2 + d_2 x^3 - e_2 x^4 + g_2 x^5$$

et la trajectoire ($f_b[x]$) de la contre-pièce de pliage (a) court dans le deuxième quadrant du plan X-Y ($x < 0$, $y > 0$) dans une zone de surface qui en outre est délimitée par les courbes

$$f_3(x) = a_1 - b_1 x - c_1 x^2 - d_1 x^3 - e_1 x^4 - g_1 x^5$$

$$f_4(x) = a_2 - b_2 x - c_2 x^2 - d_2 x^3 - e_2 x^4 - g_2 x^5, \text{ où}$$

$$a_1 = -135{,}006$$

$$b_1 = +23{,}452$$

$$c_1 = +1{,}398$$

$$d_1 = +0{,}041922$$

$$e_1 = +6{,}183 \times 10^{-4}$$

$$g_1 = +3{,}571 \times 10^{-6}$$

$$a_2 = +17{,}312$$

$$b_2 = +2{,}002$$

$$c_2 = +0{,}213$$

$$d_2 = +1{,}355 \times 10^{-2}$$

$$e_2 = +4{,}022 \times 10^{-4}$$

$$g_2 = +4{,}386 \times 10^{-6}$$

**5.** Dispositif selon l'une des revendications 1 à 4, caractérisé en ce que la trajectoire ($f_a[x]$) de la pièce de pliage est décrite par la courbe

$$y_{a6} = f_{a6}(x), \text{ avec}$$

$$f_{a6}(x) = -a_3 + b_3 x - c_3 x^2 + d_3 x^3 - e_3 x^4$$

$$\text{pour } D_1 \{x/0 \leq x \leq 6\},$$

$$y_{a7} = f_{a7}(x), \text{ avec}$$

$$f_{a7}(x) = a_4 + b_4 x - c_4 x^2 + d_4 x^3 - e_4 x^4$$

et la trajectoire ($f_b[x]$) de la contre-pièce de pliage est décrite par la courbe

$$f_{a8}(x) = -a_3 - b_3 x - c_3 x^2 - d_3 x^3 - e_3 x^4$$

$$\text{pour } D_3 \{x/-6 \leq x \leq 0\}, \text{ et}$$

$$f_{a9}(x) = a_4 - b_4 x - c_4 x^2 - d_4 x^3 - e_4 x^4$$

$$\text{pour } D_4 \{x/-40 \leq x \leq -6\}, \text{ auquel cas on a :}$$

$$a_3 = 8{,}7013$$

$$b_3 = 14{,}224$$

$$c_3 = 3{,}4512$$

$$d_3 = 0{,}40883$$

$$e_3 = 0{,}017696$$

$$a_4 = 10{,}216$$

$$b_4 = 1{,}5685$$

$$c_4 = 0{,}046046$$

$$d_2 = 0{,}68195 \times 10^{-3}$$

$$e_4 = 0{,}39415 \times 10^{-5}$$

**6.** Dispositif selon l'une des revendications 1 à 5, caractérisé en ce que la longueur de chaque trajectoire ($f_a[x]$, $f_b[x]$) dans la direction X est un peu supérieure à la moitié de la longueur du fond dans la direction X.

**7.** Dispositif selon l'une des revendications 1 à 6, caractérisé en ce que le dispositif de centrage (25) comporte deux baguettes de centrage (25), s'étendant dans la direction Z à une distance (a) l'une de l'autre, et dans la direction de transport (dans la direction X) de l'emballage (1, 1'), le dispositif de centrage (25) comportant de préférence au moins une arête de pliage au niveau de chaque baguette de centrage.

**8.** Dispositif selon l'une des revendications 1 à 6, caractérisé en ce que le rapport (V) de la distance (A) entre les baguettes de centrage et la largeur (B) de l'emballage dans la direction (direction Z) perpendiculaire à sa direction de transport, est de 0,95.

9.  Dispositif selon l'une des revendications 1 à 7, caractérisé en ce que le levier de raccordement (11) de la contre-pièce de pliage (a) est, par un premier centre de rotation (III), relié à une extrémité d'une barre (12) de guidage du pliage, menée, logée au niveau de son extrémité opposée contre un centre de rotation fixe (IV), et, par l'intermédiaire d'un deuxième centre de rotation (II), est relié à un vilebrequin d'entraînement (10), qui est fixé à une roue dentée d'entraînement (8), laquelle entre en prise, comme un peigne, avec la roue dentée menée (9) de l'autre levier de raccordement (16), de telle sorte que le plan Y-Z soit perpendiculaire à la ligne de liaison (l-l') qui relie les centres de rotations (l, m l') des roues dentées (Figure 3).

10. Dispositif selon l'une des revendications 1 à 8, caractérisé en ce que la pièce de pliage (b) a une section transversale qui se rétrécit vers l'avant, pour prendre la forme d'une plaque, et que la contre-pièce de pliage (a) est conçue comme une enclume, contre laquelle peut s'appuyer un sonotrode (21), selon une trajectoire qui de préférence se distingue, dans le temps et/ou dans l'espace, de la trajectoire ($f_a[x]$) de la pièce de pliage (b).

Fig.1

Fig.2

Fig.3

EP 0 567 769 B1

# Fig.4

# Fig.5

# Fig.6

Fig.7

Fig.7A

# Fig.8